# EUROPÄISCHE PATENTANMELDUNG

(11) **EP 4 729 698 A1**
(43) Veröffentlichungstag der Anmeldung: **22.04.2026**
(21) Anmeldenummer: 24207001.9
(22) Anmeldetag: 16.10.2024
(51) Int. Cl.: E02D 27/42

(54) **WINDENERGIEANLAGENFUNDAMENT UND VERFAHREN ZUM HERSTELLEN EINES SOLCHEN**

(71) Anmelder: Wobben Properties GmbH, 26607 Aurich (DE)
(72) Erfinder: Behrns, Martin, 18057 Rostock (DE); Villada, Jose, 26129 Oldenburg (DE)
(74) Vertreter: Eisenführ Speiser

(57) **Zusammenfassung**

Die Erfindung bezieht sich auf ein Windenergieanlagen-Fundament (1) zur Aufnahme eines Windenergieanlagen-Turms (102), mit einem Fundamentkörper (2), die aus mittels einer Bewehrung (4) verstärktem Beton (B) ausgebildet ist, aufweisend, eine im Wesentlichen ebene Grundplatte (6), welche einen Sockelbereich (8) aufweist, und mehrere sich oberhalb der Grundplatte (6) vom Sockelbereich (8) nach außen erstreckende Versteifungsrippen (10), wobei auf dem Sockelbereich (8) der Grundplatte (6) ein Turmsockel (14, 14') angeordnet ist, der eine Sockelhöhe (S_{H}) von mehr als 5 m aufweist.

## Beschreibung

Die Erfindung betrifft ein Windenergieanlagen-Fundament zur Aufnahme eines Windenergieanlagen-Turms, mit einem Fundamentkörper, der aus mittels einer Bewehrung verstärktem Beton ausgebildet ist. Des Weiteren betrifft die Erfindung ein Verfahren zum Herstellen eines Windenergieanlagen-Fundaments, insbesondere eines Windenergieanlagen-Fundaments, welches einen aus Beton ausgebildete Fundamentkörper aufweist.

Windenergieanlagen-Fundamente der vorstehend bezeichneten Art sind hinreichend bekannt und werden verwendet, um die zu errichtenden Windenergieanlagen bzw. deren Türme fest im Erdreich zu verankern. Ausgehend von den Bestrebungen, immer leistungsfähigere, größere Windenergieanlagen einzusetzen und dem Wunsch, dabei möglichst geringe Mengen an Beton als Fundament dauerhaft ins Erdreich einbringen zu müssen, folgt die Notwendigkeit, eine immer effizientere Verankerung der Windenergieanlage zu ermöglichen, was mit entsprechenden Anforderungen an die zu erstellenden Fundamente einhergeht.

Zudem ist es an einem jeweiligen Errichtungsort einer Windenergieanlage ebenfalls erstrebenswert, eine ermittelte "optimale" Nabenhöhe zu erreichen, um einen größtmöglichen Ertrag der Windenergieanlage am Errichtungsort zu erzielen. Diese "optimale" Nabenhöhe, im Weiteren als Soll-Nabenhöhe bezeichnet, fällt in Abhängigkeit von den Gegebenheiten am Errichtungsort und dem sich darum erstreckenden Gelände häufig unterschiedlich aus. Daher variieren die Soll-Nabenhöhen für verschiedene Errichtungsorte einer Windenergieanlage, weshalb für jeden Errichtungsort ein individuell in seiner Länge anzupassender Windenergieanlagen-Turm auszulegen und herzustellen wäre, um die Soll-Nabenhöhe zu erzielen bzw. nahe an diese "optimale" Nabenhöhe heran zu kommen. Eine solch individuelle Anpassung der Windenergieanlagen-Türme wäre mit hohen, sich wiederholenden Kosten verbunden, weshalb nach neuen Möglichkeiten gesucht wird, um mithilfe eines kostenoptimierten Standard-Turms, der eine feste Basislänge hat, trotz allem die für einen Errichtungsort individuell ermittelte Soll-Nabenhöhe erreichen zu können.

Der Erfindung lag somit die Aufgabe zugrunde, ein Windenergieanlagen-Fundament zur Aufnahme eines Windenergieanlagen-Turms bzw. ein Verfahren zum Herstellen eines solchen Windenergieanlagen-Fundaments aufzuzeigen, mithilfe derer einerseits eine sichere Verankerung im Erdreich und andererseits unter Verwendung eines Standard-Windenergieanlagen-Turms eine einfache und effiziente Anpassung an die jeweilige Soll-Nabenhöhe am Errichtungsort möglich ist.

Gemäß einem ersten Aspekt löst die Erfindung die ihr zugrundeliegende Aufgabe bei einem Windenergieanlagen-Fundament zur Aufnahme eines Windenergieanlagen-Turms mit den Merkmalen nach Anspruch 1. Insbesondere weist der Fundamentkörper eine im Wesentlichen ebene Grundplatte, welche einen Sockelbereich aufweist, und mehrere sich oberhalb der Grundplatte vom Sockelbereich nach außen erstreckende Versteifungsrippen auf, wobei auf dem Sockelbereich der Grundplatte ein Turmsockel angeordnet, der eine Sockelhöhe von mehr als 5 m aufweist.

Die Erfindung macht sich hierbei die Erkenntnis zunutze, dass durch das Anordnen eines Turmsockels auf dem Sockelbereich der Grundplatte, dessen Sockelhöhe je nach den Gegebenheiten am Errichtungsort individuell auf eine Höhe von mehr als 5 m angepasst werden kann, auch mit einem Windenergieanlagen-Turm, der eine einheitliche Standardlänge hat, die für den Errichtungsort ermittelte "optimale" Nabenhöhe (Soll-Nabenhöhe) mit der zu errichtenden Windenergieanlage auf einfache Weise erreicht werden kann. Mit Vorsehen eines derartig erfindungsgemäßen Fundaments können an einer Windenergieanlage unterschiedliche Soll-Nabenhöhen erreicht werden, ohne dass eine aufwendige Anpassung des Windenergieanlagen-Turms hinsichtlich seiner Turmlänge vorgenommen werden muss. Zudem ist das Anpassen der Sockelhöhe eines auf dem Sockelbereich der Grundplatte anzuordnenden Turmsockel einfacher und vor allem in geringeren Höhenschritten umsetzbar als die Längenanpassung eines Windenergieanlagen-Turms.

Gemäß einer bevorzugten Ausführungsform der Erfindung weist die Grundplatte eine im Wesentlichen kreisförmige Außenkontur auf. Damit ist bevorzugt ein gleichmäßiger Lasteintrag über insbesondere den Umfang des Fundaments in das das Fundament umgebende Erdreich am Errichtungsort der Windenergieanlage bewirkt. Zudem besteht mit der kreisförmigen Ausgestaltung der Grundplatte im Vergleich zu einer quadratischen Grundplatte, welche eine dem Durchmesser entsprechende Kantenlänge aufweist, ein geringerer Bedarf an Beton zum Herstellen der Grundplatte.

In einer bevorzugten Ausführungsform des Windenergieanlagen-Fundaments weist die Grundplatte einen Durchmesser im Bereich von etwa 16 m oder mehr, vorzugsweise 16 m - 30 m, besonders bevorzugt mehr als 30 m auf, wobei die Größe des Durchmessers von der Größe der auf dem Fundament zu montierenden Windenergieanlage abhängig ist.

Gemäß einer bevorzugten Weiterbildung ist die Grundplatte aus Ortbeton ausgebildet, was eine einfache Art der Herstellung der Grundplatte am Errichtungsort der Windenergieanlage ermöglicht. Zudem ist das Betonieren vor Ort, auch wenn es einer gewissen Logistik bedarf, um den Ortbeton an den Errichtungsort der Windenergieanlage zu transportieren, vergleichsweise einfach und begünstigt das individuelle Anpassen der Fundamentgröße an die am Errichtungsort zu verwirklichende Anlagengröße.

In einer bevorzugten Ausführungsform sind der Turmsockel und die Versteifungsrippen des Windenergieanlagen-Fundaments aus Betonfertigteilen oder Ortbeton ausgebildet. Die Vorfertigung von Teilen des Fundaments, insbesondere des Turmsockels oder Abschnitten dessen bzw. der Versteifungsrippen, in einem Betonwerk begünstigt die automatisierte Herstellung in dafür vorgesehenen bevorzugt mehrmals verwendbaren Formen. So hergestellte Betonfertigteile weisen eine hohe Maßhaltigkeit auf und sind dann nur noch an den Errichtungsort zu transportieren. Bevorzugt werden die Betonfertigteile unter Verwendung von Ortbeton mit der bereits zuvor am Errichtungsort hergestellten Grundplatte und dem Sockelbereich verbunden. Vorzugsweise ist zumindest der Fundamentkörper, aufweisend die ebene Grundplatte mit ihrem Sockelbereich und die auf der Grundplatte angeordneten Versteifungsrippen, als ein monolithisch ausgebildetes Bauteil ausgeführt.

In einer Ausführungsform kann wenigstens ein Abschnitt des auf dem Sockelbereich der Grundplatte anzuordnenden Turmsockels aus Ortbeton ausgeführt und monolithisch mit der Grundplatte verbunden sein, wobei nur noch ein oberer Abschnitt des insbesondere mehr als 5 m hohen Turmsockels aus Betonfertigteilen ausgebildet ist. In einer weiteren Ausführungsform können sowohl der Turmsockel als auch die Versteifungsrippen vollständig aus Ortbeton ausgebildet sein.

Vorzugsweise haben die Grundplatte und der Sockelbereich einen bewehrungsfreien Mittenbereich. Insbesondere Bereiche des Fundamentkörpers, die einer vergleichsweise geringen Belastung unterliegen, werden mit einem verringerten Anteil an Bewehrung bzw. in einer bevorzugten Ausführung bewehrungsfrei ausgeführt. Damit kann der Anteil an Stahl, der zur Ausbildung des Fundamentkörpers verwendet wird, bevorzugt vermindert werden.

Gemäß einer Weiterbildung des Windenergieanlagen-Fundaments weist die Grundplatte eine Dicke von weniger als 1 m, insbesondere weniger als 0,70 m, bevorzugt etwa 0,50 m auf. Bevorzugt ist die Dicke der im Wesentlichen eben ausgeführten Grundplatte so gewählt, dass sie den auf den Fundamentkörper insgesamt einwirkenden Kräften ohne eine Beeinträchtigung ihrer Festigkeit widerstehen kann. Bevorzugt weist die Grundplatte eine Dicke von etwa 50 cm auf, wobei die Grundplatten-Dicke in Abhängigkeit vom Fundamentdurchmesser und gegebenenfalls der Anzahl der auf der Grundplatte angeordneten Versteifungsrippen des Fundamentkörpers um etwa 10 -20 Prozent variiert.

Gemäß einer Weiterbildung ist vorgesehen, dass die Versteifungsrippen in Erstreckungsrichtung nach außen eine sich verringernde Rippenhöhe und/oder eine etwa gleichbleibende Rippenbreite aufweisen. Mithilfe der sich vom Sockelbereich in Richtung des Außenumfangs des Fundamentkörpers in ihrer Höhe verringernden Versteifungsrippen ist eine sichere und konstruktiv einfache Kraftableitung in den erfindungsgemäß ausgebildeten Fundamentkörper und weiter in das den Fundamentkörper tragende Erdreich bewirkt. Durch die mehreren, bevorzugt gleichmäßig um den Sockelbereich der Grundplatte herum verteilten Versteifungsrippen ist eine ausreichend hohe Festigkeit des Fundamentkörpers insgesamt erzielt, auch wenn durch die Freiräume zwischen den Versteifungsrippen oberhalb der Grundplatte ein hohes Einsparpotential an Betonwerkstoff gegeben ist. Vorzugsweise werden die Bereiche zwischen den Versteifungsrippen des Fundamentkörpers durch eine verdichtete Bodenauflast ausgefüllt, welche eine Mindestwichte von mindestens 18 kN/m³ aufweist. Ein derartig erfindungsgemäß ausgebildetes Fundament kann mit seinem erfindungsgemäßen Fundamentkörper, auf der ein Turmsockel mit einer Sockelhöhe von mehr als 5 m angeordnet sein kann, zumindest abschnittsweise über die Geländeoberkante hinausragen, wobei vorzugsweise zumindest der Fundamentkörper am Errichtungsort dann mit einer zusätzlichen Bodenauflast zu beschweren ist. Vorzugsweise kann die Bodenauflast mit einem die Außenkontur der Grundplatte überragenden Überstand versehen sein.

Vorzugsweise sind zehn, zwölf und mehr Versteifungsrippen um den Sockelbereich herum auf der Grundplatte angeordnet. Vorzugsweise verringert sich die Rippenhöhe jeder Versteifungsrippe um mehr als die Hälfte ausgehend von ihrer Ausgangshöhe nahe des Sockelbereichs bis zu ihrem entgegengesetzten Ende. In einer bevorzugten Ausführung weisen die Versteifungsrippen ausgehend vom Sockelbereich in Richtung der Außenkontur der Grundplatte, bis zu der sich insbesondere jede der Versteifungsrippen erstreckt, eine gleichbleibende Rippenbreite auf. In einer möglichen alternativen Ausgestaltung kann sich die Rippenbreite der Versteifungsrippen vom Sockelbereich in Richtung der Außenkontur der Grundplatte auch allmählich verringern.

Gemäß einer bevorzugten Weiterbildung der Erfindung weist die Grundplatte eine im Wesentlichen ebene Oberseite auf, wobei zwischen der Oberseite der Grundplatte und jeder der darauf angeordneten Versteifungsrippen eine Verbindungsfuge vorgesehen ist. Mithilfe der Verbindungsfuge, die sowohl im Wesentlichen glatt oder auch rau, insbesondere verzahnt, ausgeführt sein kann, ist zumindest teilweise eine strukturelle Trennung von Teilen des die Grundplatte und die Versteifungsrippen ausbildenden Betonwerkstoffs erzeugt. Durch die sich zwischen der Grundplatte und den Versteifungsrippen durchgehend erstreckende Bewehrung ist jedoch weiterhin eine feste Verbindung umgesetzt. Mit Verbindungsfuge wird insbesondere das Übertragen von in Längsrichtung der Versteifungsrippen wirkenden Schubkräften in die Grundplatte und damit das Ableiten von in den Turmsockel des Windenergieanlagen-Fundaments eingebrachten Lasten durch die darauf montierte Windenergieanlage in das Gesamtfundament verbessert.

Eine Weiterbildung des Windenergieanlagen-Fundaments sieht vor, dass zur Ausbildung der verzahnten Verbindungsfuge, welche vorzugsweise trapezförmig ausgeführt ist, in den aneinandergrenzenden Bauteilbereichen von der Grundplatte und den Versteifungsrippen ein oder mehrere gewellte Blechstreifen angeordnet ist/sind. Mithilfe des oder der in den aneinandergrenzenden Bauteilbereichen von Grundplatte und Versteifungsrippen angeordneten Blechstreifen ist eine konstruktiv einfache Ausgestaltung einer verzahnten Verbindungsfuge möglich. Die Blechstreifen werden vorzugsweise beim Herstellen des Fundaments derart in die Grundplatte integriert, dass die Unterseite der Blechstreifen direkt mit der Oberseite der ebenen Grundplatte in Kontakt ist, jedoch die Oberseite der Blechstreifen jeweils frei von etwaigem beim Herstellen der Grundplatte auf die Oberseite der Blechstreifen übergetretenen Betonwerkstoff ist. Die Blechstreifen sind insbesondere trapezförmig ausgeführt, womit eine stabile Ausgestaltung der verzahnten Verbindungsfuge zwischen den einander zugewandten Bauteilbereichen erreicht und insbesondere ein partielles Versagen derer vermieden ist.

Gemäß einer bevorzugten Ausgestaltung weist der Fundamentkörper zumindest in ihrem Sockelbereich einen Ankerkorb mit einer Vielzahl von, vorzugsweise senkrecht zur Grundplatte verlaufenden, Ankerstangen auf, welcher zum Vorspannen des Fundamentkörpers und zum Befestigen des Windenergieanlagen-Turms auf dem Fundament eingerichtet ist. Mittels des Ankerkorbs und seiner Vielzahl an Ankerstangen erfolgt eine sichere und vor allem gleichmäßig verteilte Krafteinleitung vom dem damit verbundenen Windenergieanlagen-Turm insbesondere in den Turmsockel, und weiterhin in die Versteifungsrippen des Fundamentkörpers hinein. Zudem kann mittels des Ankerkorbs der Sockelbereich des Fundamentkörpers vorgespannt werden, wodurch ein Risiko etwaiger Rissbildung im Sockelbereich verringert werden kann. Hierdurch werden Sockelhöhen von deutlich mehr als 5 m noch weiter begünstigt.

Der Ankerkorb ist vorzugsweise abschnittsweise innerhalb des Fundamentkörpers angeordnet und erstreckt sich bis in den oberhalb des Sockelbereichs der Grundplatte angeordneten Turmsockel. Der Ankerkorb hat eine Vielzahl von in Sockelbereich direkt einbetonierten Ankerstangen, welche insbesondere bezogen auf die Grundplatte senkrecht dazu ausgerichtet sind.

Gemäß einer bevorzugten Ausgestaltung des Windenergieanlagen-Fundaments erstrecken sich die Ankerstangen von dem Fundamentkörper bis über die Oberseite des auf dem Fundamentkörper angeordneten Turmsockels.

Vorzugsweise wird alternativ oder zusätzlich innerhalb des Sockelbereichs der Grundplatte wenigstens eine waagerecht verlaufende Ankerplatte vorgesehen, welche vorzugsweise ringförmig ausgebildet ist und mittels derer mehrere oder sämtliche der Vielzahl an Ankerstangen gekoppelt sind. Mittels eines derart ausgebildeten Ankerkorbs und seiner Ankerstangen kann eine durchgängige Verbindung zwischen dem Fundamentkörper, insbesondere der Grundplatte, dem darauf ausgebildeten Sockelbereich, dem oberhalb des Sockelbereichs angeordneten Turmsockels und dem auf dem Turmsockel angeordneten Turm der Windenergieanlage erzielt werden.

In einer bevorzugten Ausführungsform ist innerhalb des Fundamentkörpers, insbesondere im Sockelbereich, genau eine Ankerplatte vorgesehen.

Vorzugsweise weist die Grundplatte an ihrer Unterseite im Sockelbereich des Fundamentkörpers einen wannenartigen Vorsprung aufweist, in den vorzugsweise sich die Ankerstangen hinein erstrecken und in dem die mit den Ankerstangen verbundene Ankerplatte angeordnet ist. Der Ankerkorb ist vorzugsweise mit seinem unteren Ende vollständig innerhalb des Fundamentkörpers aufgenommen.

Insbesondere wird zur Ausbildung eines Ankerkorbs bei einem Fundament mit einer Sockelhöhe des Turmsockels von mehr als 5 m jede Ankerstange aus einem durchgehenden Stangenteil oder alternativ aus mindestens zwei miteinander gekoppelten Stangenteilen ausgebildet. Bei zwei Stangenteilen sind die einander zugewandten Enden der Stangenteile vorzugsweise mit Gewindeabschnitten versehen, die über Schraubhülsen miteinander gekoppelt werden. In einer bevorzugten Ausführungsform schließt die Ankerplatte mit der Unterseite des wannenartigen Vorsprungs der Grundplatte bzw. der Unterseite einer eben ausgebildeten Grundplatte ab.

Die Erfindung betrifft in einem weiteren Aspekt ein Verfahren zum Herstellen eines Windenergieanlagen-Fundaments, insbesondere eines Windenergieanlagen-Fundaments nach einem der vorstehenden Ansprüche, welches einen Fundamentkörper, umfassend eine im Wesentlichen ebene Grundplatte, welche einen Sockelbereich aufweist, und mehrere sich oberhalb der Grundplatte vom Sockelbereich nach außen erstreckende Versteifungsrippen, und einen auf dem Sockelbereich der Grundplatte angeordneten Turmsockel aufweist.

Das erfindungsgemäße Verfahren löst auch die dem erfindungsgemäßen Windenergieanlagen-Fundament zugrunde gelegte Aufgabe mit den Schritten: Bestimmen oder Bereitstellen einer Soll-Nabenhöhe der zu errichtenden Windenergieanlage an ihrem Errichtungsort, welche einen Turm mit einer vorbestimmten Höhe aufweist, der auf dem Turmsockel installiert wird, Herstellen des Fundamentkörpers, und Herstellen des oberhalb des Sockelbereichs der Grundplatte anzuordnenden Turmsockels, wobei das Herstellen des Turmsockels ein Abstimmen der Nabenhöhe der Windenergieanlage auf die Soll-Nabenhöhe mittels Anpassen der Sockelhöhe des Turmsockels auf eine Sockelhöhe von mehr als 5 m unter Berücksichtigung der Turmhöhe für die Windenergieanlage umfasst. Mithilfe der erfindungsgemäßen Verfahrensschritte ist das Herstellen eines Windenergieanlagen-Fundaments möglich, welches das Anpassen der Nabenhöhe der zu errichtenden Windenergieanlage unter Verwendung eines Windenergieanlagen-Turms mit einer einheitlichen Standardlänge an eine Soll-Nabenhöhe am jeweiligen Errichtungsort für die Windenergieanlage im Vergleich zu bekannten Herstellungsverfahren vereinfacht. Mittels Anpassen der Sockelhöhe des auf dem Sockelbereich der Grundplatte anzuordnenden Turmsockels auf eine Sockelhöhe von mehr als 5 m können entsprechend kostenoptimierte Windenergieanlagen-Türme auf einem solch erfindungsgemäßen individuell fertigbaren Windenergieanlagen-Fundament montiert werden. Insgesamt ist ein variables Anpassen der Nabenhöhe im Bereich von um die 8 m Abweichung möglich. Die angegebene Abweichung ergibt sich neben dem Vorsehen eines auf dem Fundamentkörper individuell ausgeführten Turmsockels auch in der entsprechend optimierten Anordnung des Fundamentkörpers im bzw. zum Erdreich, insbesondere bezogen auf das Höhenniveau des Fundamentkörpers gegenüber der Geländeoberkante am Errichtungsort.

Gemäß einer bevorzugten Ausgestaltung ist das erfindungsgemäße Verfahren dahingehend weitergebildet, dass das Herstellen des Fundamentkörpers zumindest einen, mehrere oder sämtliche der nachfolgend aufgeführten Schritte umfasst: Herstellen und/oder Bereitstellen einer Bewehrung für zumindest den Fundamentkörper am Errichtungsort, wobei vorzugsweise zumindest ein Teil der Bewehrung als Ankerkorb ausgebildet ist, Herstellen und/oder Bereitstellen einer Schalung um die Bewehrung herum, Bereitstellen von Betonfertigteilen, welche vorzugsweise die Versteifungsrippen ausbilden, Betonieren zumindest der Grundplatte und des Sockelbereichs an der Grundplatte mittels Einbringen von Beton in die Schalung, sodass die Bewehrung nahezu vollständig in dem Beton eingebettet wird, wobei vorzugsweise mit Verwendung von Betonfertigteilen als Versteifungsrippen mit dem Betonieren eine Verbindung zwischen den Betonfertigteilen und der Grundplatte und dem Sockelbereich erzeugt wird, und Anpassen der Höhe der Versteifungsrippen an ihrem dem Sockelbereich des Fundamentkörpers zugewandten Ende in Abhängigkeit von der zu erstellenden Sockelhöhe des Turmsockels.

Um den Fundamentkörper, vorzugsweise unter Verwendung von Ortbeton, am Errichtungsort für die Windenergieanlage erzeugen zu können, wird am Errichtungsort eine entsprechend an die Größe der zu erzeugenden Grundplatte und des Sockelbereichs der Grundplatte angepasste Bewehrung hergestellt oder bereitgestellt. Vorzugsweise besteht die Bewehrung teilweise aus einem sich über die Höhe des Sockelbereichs erstreckenden Ankerkorb, der eine Vielzahl von sich senkrecht zur Grundplatte erstreckenden Ankerstangen umfasst. Durch den vorgespannten Ankerkorb kann der gesamte Sockel vorgespannt werden, wodurch sich ein Risiko der Rissbildung stark verringern lässt (siehe obige Ausführungen). Es lässt sich so vorzugsweise auch die Bewehrungsmenge verringern, wobei vorzugsweise weiterhin zusätzliche Bewehrung im Sockel vorgesehen wird.

Nach dem Herstellen oder Bereitstellen der Bewehrung wird diese entsprechend der herzustellenden Form des Fundamentkörpers eingeschalt, wobei die Schalung als Begrenzung für den zum Herstellen des Fundaments verwendeten fließfähigen Ortbeton dient. In einer bevorzugten Ausführungsform des erfindungsgemäßen Verfahrens werden zum Herstellen des Fundamentkörpers Betonfertigteile verwendet, welche vorgefertigt und am Errichtungsort bereitgestellt werden. Vorzugsweise werden die auf der Grundplatte und sich vom Sockelbereich aus radial nach außen erstreckenden Versteifungsrippen als Betonfertigteile ausgeführt. Durch anschließendes Einbringen von Ortbeton in die hergestellte oder bereitgestellte Schalung werden zumindest die Grundplatte und deren Sockelbereich betoniert, wobei die Bewehrung, welche aus einer Vielzahl von miteinander verflochtenen Stahlstreben besteht, nahezu vollständig in dem Ortbeton eingebettet wird. Sollten zur Ausbildung der Versteifungsrippen Betonfertigteile verwendet werden, werden diese gegenüber der hergestellten und/oder bereitgestellten Bewehrung für die Grundplatte und deren Sockelbereich positioniert und bereichsweise durch die die Bewehrung umgebende Schalung eingefasst. Mit dem Betonieren wird eine Verbindung zwischen den Betonfertigteilen und der aus Ortbeton zu erzeugenden Grundplatte und dem Sockelbereich hergestellt. In einer bevorzugten Ausführungsform des erfindungsgemäßen Verfahrens wird die Höhe der Versteifungsrippen, insbesondere an ihrem den Sockelbereich der Grundplatte zugewandten Ende, in Abhängigkeit von der zu erstellenden Sockelhöhe des Turmsockels und der daraus resultierenden endgültigen Nabenhöhe der Windenergieanlage angepasst. Die Höhe der Versteifungsrippen am Sockelbereich kann geringer als die Höhe des Sockelbereichs der Grundplatte sein. In einer alternativen Ausführung weisen die Versteifungsrippen eine Höhe am Sockelbereich auf, welche etwa der Hälfte der Sockelhöhe des oberhalb des Sockelbereichs angeordneten Turmsockels mit einer Sockelhöhe von 5 m entspricht. Die Versteifungsrippen können jede beliebige Höhe in den vorbeschriebenen Grenzen haben.

In einer bevorzugten Weiterbildung des erfindungsgemäßen Verfahrens umfasst das Herstellen des Turmsockels zumindest einen, mehrere oder sämtliche der nachfolgend aufgeführten Schritte: Bereitstellen mindestens eines Betonfertigteils zur Ausbildung des Turmsockels und Aufsetzen des Betonfertigteils auf den Sockelbereich des ausgehärteten Fundamentkörpers, Koppeln des Betonfertigteils mit der aus dem Fundamentkörper vorstehenden Bewehrung, Herstellen und/oder Bereitstellen einer Bewehrung für den Turmsockel am Errichtungsort, wobei zumindest ein Teil der Bewehrung vorzugsweise als Ankerkorb ausgebildet ist, Herstellen und/oder Bereitstellen einer Schalung um die Bewehrung herum, und Betonieren des Turmsockels des Fundamentkörpers mittels Einbringen von Beton in die Schalung, sodass die Bewehrung nahezu vollständig in dem Beton eingebettet wird. Der auf dem Sockelbereich der Grundplatte auszubildende Turmsockel, welcher eine Sockelhöhe von mehr als 5 m aufweist, kann entweder aus vorgefertigten Betonfertigteilen oder direkt vor Ort mittels Ortbeton hergestellt werden. Bei Verwendung von Ortbeton wird in einer Ausführung der Sockelbereich der Grundplatte und der herzustellende Turmsockel mit seiner Sockelhöhe von mehr als 5 m monolithisch ausgeführt; Sockelbereich und Turmsockel sind somit einstückig ausgebildet. Bei Verwendung von Ortbeton zum Herstellen des Turmsockels wird am Errichtungsort eine Bewehrung für den Turmsockel hergestellt, welche teilweise als Ankerkorb ausgebildet ist, wobei die Bewehrung für den Turmsockel auch abschnittsweise die Bewehrung für den Sockelbereich und die Grundplatte des Fundaments sein kann. Insbesondere werden Abschnitte der Bewehrung des Fundamentkörpers und des oberhalb des Sockelbereichs anzuordnenden Turmsockels für eine verbesserte Lastableitung miteinander verknüpft.

Die zum erfindungsgemäßen Windenergieanlagen-Fundament beschriebenen, bevorzugten Ausführungsformen oder Weiterbildungen sind zugleich auch bevorzugte Ausführungsformen des erfindungsgemäßen Verfahrens zum Herstellen eines solchen Windenergieanlagen-Fundaments. Zum Herstellungsverfahren für das Windenergieanlagen-Fundament beschriebene, bevorzugte Ausführungsformen bzw. Weiterbildungen sind zugleich bevorzugte Ausführungsformen des Windenergieanlagen-Fundaments.

Die Erfindung wird nachfolgend anhand eines bevorzugten Ausführungsbeispiels unter Bezugnahme auf die beigefügten Figuren näher beschrieben. Hierbei zeigen:
- Fig. 1:: eine Ansicht einer Windenergieanlage;
- Fig. 2a-c:: schematische Darstellungen für das Errichten einer Windenergieanlage nach Fig. 1 auf verschiedenen Höhenniveaus;
- Fig. 3 und 4:: Schnittdarstellungen von verschiedenen Ausführungsformen eines erfindungsgemäßen Windenergieanlagen-Fundaments;
- Fig. 5:: eine Draufsicht einer Ausführungsform eines erfindungsgemäßen Windenergieanlagen-Fundaments, und
- Fig. 6:: einen schematischen Verfahrensablauf eines Verfahrens zum Herstellen eines Windenergieanlagen-Fundaments.

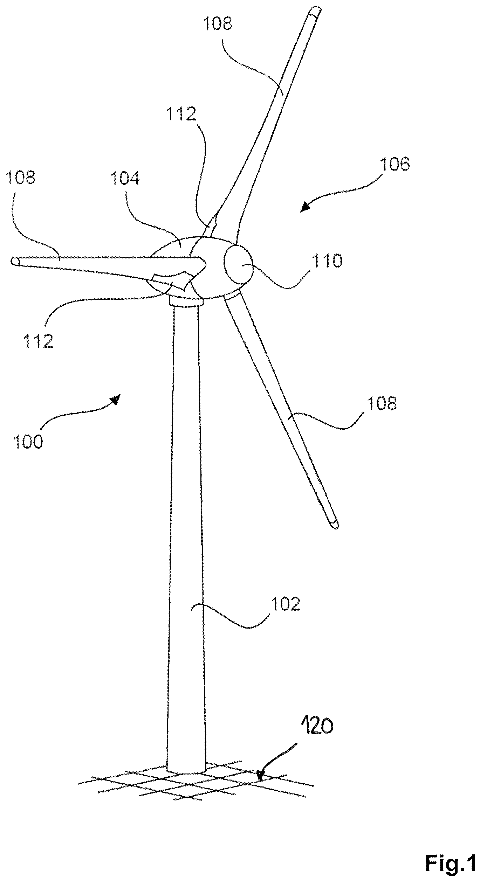

Fig. 1 zeigt eine schematische, dreidimensionale Ansicht einer Windenergieanlage 100. Die Windenergieanlage 100 weist einen Turm 102 und eine am oberen Ende des Turms 102 angeordnete Gondel 104 auf. Der Turm 102 kann in einer möglichen Ausführung aus übereinander angeordneten Turmsegmenten ausgebildet sein. An der Gondel 104 ist ein aerodynamischer Rotor 106 mit drei Rotorblättern 108 angeordnet. Der aerodynamische Rotor 106 ist zudem mit einem Spinner 110 ausgerüstet. Der aerodynamische Rotor wird im Betrieb der Windenergieanlage 100 durch den Wind in eine Drehbewegung versetzt, welcher einen mit dem aerodynamischen Rotor 106 gekoppelten, nicht näher gezeigten elektrodynamischen Rotor oder Läufer eines Generators antreibt. Der Rotor oder Läufer des Generators kann direkt oder indirekt mit dem aerodynamischen Rotor 106 gekoppelt sein. Der Generator ist innerhalb der Gondel 104 angeordnet und erzeugt elektrische Energie.

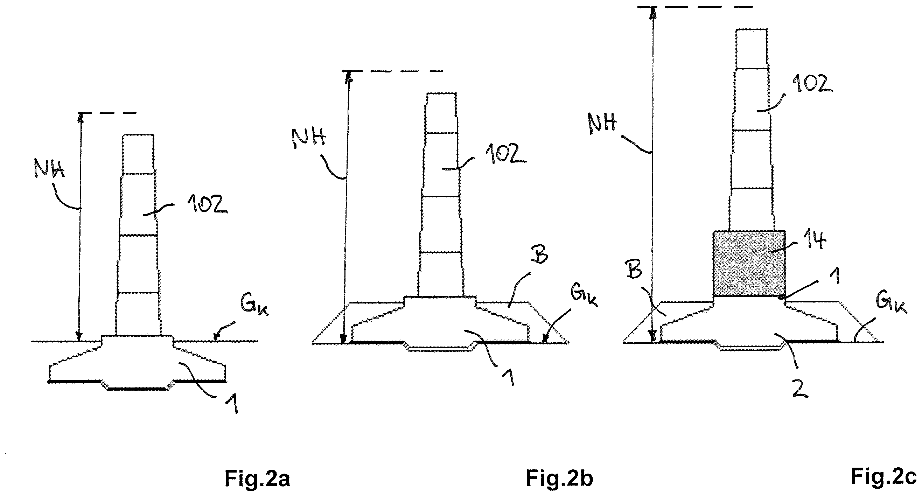

Der Turm 102 ist mittels eines Fundaments 1 im Erdreich 120 verankert, worauf in den nachfolgenden Fig. 2 bis 5 näher eingegangen wird.

Die Fig. 2a - 2c zeigen verschiedene schematische Darstellungen für das Errichten einer Windenergieanlage 100 mit einem Standard-Turm 102 auf verschiedenen Höhenniveaus, was mithilfe einer entsprechenden Anordnung bzw. Anpassung des Fundaments 1 erfolgt.

In Fig. 2a ist das Fundament 1 in das Erdreich 120 eingelassen, wobei mit Verwendung eines Standard-Turms 102 eine Nabenhöhe NH von 108 m bezogen auf die Geländeoberkante G_{K} erreicht wird. Fig. 2b zeigt eine Anordnung des Fundaments 1 aufgesetzt auf die Geländeoberkante G_{K} des Erdreichs 120. Das erfindungsgemäße Fundament 1 wird dann mit einer verdichteten Bodenauflast B beschwert, wobei mit dieser Anordnung unter Verwendung eines Standard-Turms 102 eine Nabenhöhe NH von 111 m bezogen auf die Geländeoberkante G_{K} möglich ist.

In der dritten in Fig. 2c gezeigten erfindungsgemäßen Anordnung ist im Vergleich zu der in Fig. 2b gezeigten Abbildung das Fundament 1 zusätzlich mit einem Turmsockel 14 mit einer Sockelhöhe von mehr als 5 m ausgerüstet. Mit einem derartig erfindungsgemäß ausgebildeten Fundament 1 werden unter Verwendung eines Standard-Turms 102 nun Nabenhöhen NH von mehr als 116 m bezogen auf die Geländeoberkante G_{K} erreicht. Mit der gezielten Anordnung des Fundaments 1 und der Verwendung eines Turmsockels lassen sich ohne eine Anpassung des Standard-Turms 102 Anpassungen in der Nabenhöhe NH von mehr als 8 m Höhendifferenz verwirklichen.

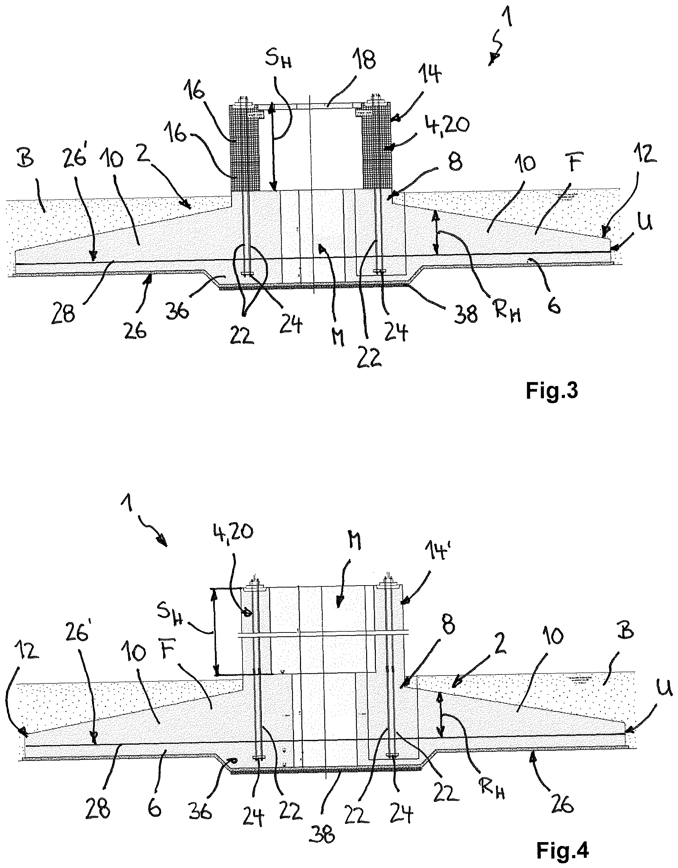

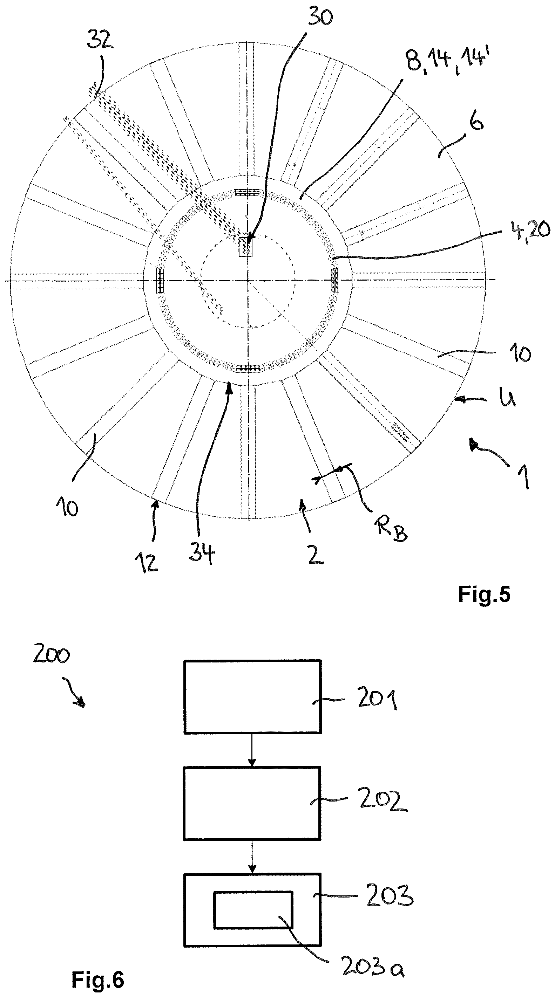

Fig. 3 und 4 zeigen Ausführungsformen eines erfindungsgemäßen Windenergieanlagen-Fundaments 1, das einen Fundamentkörper 2 aufweist, welche aus mittels einer Bewehrung 4 verstärktem Beton F ausgebildet ist. Der Fundamentkörper 2 umfasst eine im Wesentlichen ebene Grundplatte 6, welche einen in deren Mittenbereich M angeordneten Sockelbereich 8 aufweist. Ferner umfasst der Fundamentkörper 2 mehrere sich oberhalb der Grundplatte 6 vom Sockelbereich 8 insbesondere radial nach außen erstreckende Versteifungsrippen 10 (Fig.5). Die Anzahl der Versteifungsrippen 10 variiert in Abhängigkeit von der Größe des Fundaments 1 und der darauf zu montierenden Windenergieanlage 100, wobei die Anzahl beispielsweise zwischen vier und 20 Versteifungsrippen 10 variieren kann. Der Bereich oberhalb der ebenen Grundplatte 6 und zwischen den Versteifungsrippen 10 ist jeweils für eine verbesserte Verankerung des Fundaments mit einer Bodenauflast aus verdichtetem Erdreich 120, wie aus den Fig. 3 und 4 zu entnehmen, aufgefüllt.

Die Grundplatte 6, deren Sockelbereich 8 sowie die Versteifungsrippen 10 sind in einer möglichen Ausführung aus Ortbeton ausgebildet. In einer anderen Ausführung können zumindest die Versteifungsrippen 10 des Fundamentkörpers 2 als Betonfertigteile vorgefertigt sein, welche dann am Errichtungsort mit der Grundplatte 6 und dem Sockelbereich 8 verbunden werden.

Wie ferner aus den Fig. 3 und 4 zu entnehmen, weist die Grundplatte 6 und deren Sockelbereich 8 einen in Bezug auf die Bewehrung 4 verringerten bzw. bewehrungsfreien Mittenbereich M auf. Die Grundplatte 6 hat eine Dicke von weniger als 70 cm, bevorzugt etwa 50 cm. Die Versteifungsrippen 10 weisen in ihrer Erstreckungsrichtung radial nach außen eine sich verringernde Rippenhöhe R_{H} auf. Die Rippenhöhe verändert sich von einem Wert nahe des Sockelbereichs von etwa 2 m bis zu den Rippenenden 12 im Umfangsbereich der Grundplatte 6 auf eine Höhe von etwa 0,8 m.

Zudem ist auf dem Sockelbereich 8 der Grundplatte 6 ein Turmsockel 14 angeordnet, der hinsichtlich seiner Sockelhöhe S_{H} angepasst werden kann und somit wie in den Fig. 2a-c beschrieben, zum Anpassen der Nabenhöhe NH an eine für den Errichtungsort ermittelte optimale Soll-Nabenhöhe NH_{SOLL} eingerichtet ist.

Der in Fig. 3 gezeigte Turmsockel 14 weist eine Sockelhöhe S_{H} von 3 m auf und ist insbesondere aus separaten, auf einer Oberseite des Sockelbereichs 8 anzuordnenden Betonfertigteilen 16 ausgebildet. Der Turmsockel 14 ist aus mehreren, insbesondere drei solcher übereinander angeordneter ringförmiger Betonfertigteile 16 ausgeführt sein. Die Oberseite des aus Betonfertigteilen 16 bestehenden Turmsockels 14 ist durch eine Fundamentabdeckplatte 18 verschlossen.

Fig. 4 zeigt eine alternative Ausführungsform eines auf dem Sockelbereich 8 der Grundplatte 6 ausgebildeten Turmsockels 14`, welcher wie der Fundamentkörper 2 auch aus Ortbeton ausgebildet ist. Der in Fig. 4 gezeigte Turmsockel 14' ist monolithisch mit dem Sockelbereich 8 und somit dem Fundamentkörper 2 verbunden. Der in Fig. 4 gezeigte Turmsockel 14' weist eine Sockelhöhe S_{H} von mehr als 5 m auf. Der Mittenbereich M des Sockelbereichs 8 und des Turmsockels 14' sind ebenfalls mit Ortbeton ausgefüllt, wobei der Mittenbereich M jeweils bewehrungsfrei ausgeführt ist.

Wie aus den Fig. 3 und 4 weiterhin zu entnehmen ist, weist die Bewehrung 4 insbesondere einen Ankerkorb 20 auf, der eine Vielzahl von etwa senkrecht zur Grundplatte 6 verlaufenden Ankerstangen 22 umfasst. Der Ankerkorb 20 ist zum einen zum Verspannen des Fundamentkörpers 2 und zum anderen zum Befestigen des Windenergieanlagen-Turms 102 auf dem Fundament 1, insbesondere auf dem Turmsockel 14, 14' eingerichtet.

Die Ankerstangen 22 erstrecken sich von nahezu der Unterseite 26 der Grundplatte 6 durch den Sockelbereich 8 bis jeweils in den auf dem Sockelbereich 8 angeordneten Turmsockel 14, 14' hinein. Die Ankerstangen 22 erstrecken sich insbesondere jeweils bis über die Oberseite des Turmsockels 14, 14' hinweg. Der Ankerkorb 20 umfasst ferner wenigstens eine waagerecht verlaufende Ankerplatte 24. Die Ankerplatte 24 ist ringförmig ausgebildet und insbesondere mehrere, bevorzugt sämtliche der im Fundament 1 angeordneten Ankerstangen 22 sind mit den Ankerplatten 24 gekoppelt.

In einer Ausführung weist die Grundplatte 6 an ihrer Unterseite 26 im Sockelbereich 8 des Fundamentkörpers 2 einen wannenartigen Vorsprung 36 auf, in den vorzugsweise sich die Ankerstangen 22 hinein erstrecken und in dem die Ankerplatte 24 angeordnet ist. Unterhalb des wannenartigen Vorsprungs 36 ist eine kompressible Einlage 38 aus einem Dämmstoff gemäß DIN EN 13163 angeordnet.

Die Grundplatte 6 weist eine ebene Oberseite 26' auf, wobei zwischen der Oberseite 26' der Grundplatte 6 und jeder der darauf angeordneten Versteifungsrippen 10 eine Verbindungsfuge 28 ausgebildet ist, welche sowohl glatt oder rau, insbesondere verzahnt ausgeführt sein kann. Mithilfe der Verbindungsfuge 28 wird die Übertragung von insbesondere in Längsrichtung der Versteifungsrippen 10 wirkenden Schubkräften von der Versteifungsrippe 10 in Richtung der Grundplatte 6 und in umgekehrte Richtung verbessert.

Fig. 5 zeigt eine Draufsicht auf ein erfindungsgemäßes Windenergieanlagen-Fundament 1, welches vorliegend als Rippenfundament ausgebildet ist. Wie Fig. 5 verdeutlicht, sind eine Vielzahl von Versteifungsrippen 10, insbesondere sechszehn Versteifungsrippen 10, auf der Grundplatte 6 des Fundamentkörpers 2 angeordnet. Die Grundplatte 6 weist eine im Wesentlichen kreisförmige Außenkontur U auf. Zudem sind von einem von der Oberseite des Sockelbereichs 8 aus zugänglichen Aufnahmeraum 30 bis zur Außenkontur U der Fundament- bzw. Grundplatte 2, 6 mehrere Leerrohre 32 verlegt.

Wie Fig. 5 ferner zeigt, weisen die Versteifungsrippen 10 eine gleichbleibende Rippenbreite R_{B} entlang ihrer Erstreckung auf, wobei die Versteifungsrippen 10 eine Rippenbreite R_{B} von insbesondere 0,8 m haben. Der Außenumfang des Sockelbereichs 8 ist vorliegend polygonal ausgeführt. Insbesondere weist der Sockelbereich 8 eine zwischen zwei benachbarten Versteifungsrippen 10 ebene Wandfläche 34 auf.

Das Herstellen eines oben beschriebenen erfindungsgemäßen Fundaments 1 erfolgt gemäß einem bevorzugten Ausführungsbeispiel eines exemplarisch in Fig. 6 gezeigten Verfahrens 200. In einem ersten Schritt 201 wird eine Soll-Nabenhöhe NH_{SOLL} der zu errichtenden Windenergieanlage am Errichtungsort bestimmt oder bereitgestellt, wobei die Windenergieanlage 100 einen Turm 102 mit einer vorgegebenen Standardhöhe aufweist, der auf dem Turmsockel 14, 14' des Fundaments 1 installiert wird. In einem nächsten Schritt 202 erfolgt das Herstellen des Fundamentkörpers 2, welche zumindest eine Grundplatte 6, einen auf der Grundplatte ausgebildeten Sockelbereich 8 und mehrere sich oberhalb der Grundplatte 6 vom Sockelbereich radial nach außen erstreckende Versteifungsrippen 10 umfasst.

Der Schritt 202 kann beispielsweise mehrere Unterschritte umfassen, wie beispielsweise das Herstellen und/oder Bereitstellen einer Bewehrung für den Fundamentkörper 2 sowie das Herstellen und/oder Bereitstellen einer Schalung um die Bewehrung und zumindest das Betonieren des Fundamentkörpers 2 am Errichtungsort.

In einem insbesondere nachfolgend ausgeführten Schritt 203 erfolgt das Herstellen eines Turmsockels 14, 14' oberhalb des Sockelbereichs 8 der Grundplatte 6, wobei das Herstellen des Turmsockels 14, 14' gemäß Schritt 203a ein Abstimmen der Nabenhöhe NH der Windenergieanlage 100 auf die Soll-Nabenhöhe NH_{SOLL} mittels Anpassen der Sockelhöhe S_{H} des Turmsockels 14, 14' auf eine Sockelhöhe S_{H} von mehr als 5 m unter Berücksichtigung der Standard-Turmhöhe für die Windenergieanlage 100 umfasst. Das Herstellen des Turmsockels 14, 14`, insbesondere dessen Sockelhöhe S_{H}, erfolgt jeweils individuell angepasst an die am Errichtungsort der Windenergieanlage 100 zu erreichende Soll-Nabenhöhe NH_{SOLL}.

### Bezugszeichenliste:

- 1: Fundament
- 2: Fundamentkörper
- 4: Bewehrung
- 6: Grundplatte
- 8: Sockelbereich
- 10: Versteifungsrippen
- 12: Rippenende
- 14, 14`: Turmsockel
- 16: Betonfertigteil
- 18: Fundamentabdeckplatte
- 20: Ankerkorb
- 22: Ankerstangen
- 24: Ankerplatte
- 26: Unterseite
- 26': Oberseite
- 28: Verbindungsfuge
- 30: Aufnahmeraum
- 32: Leerrohr
- 34: Wandfläche
- 36: wannenartiger Vorsprung
- 38: Einlage
- 100: Windenergieanlage
- 102: Turm
- 104: Gondel
- 106: Rotor
- 108: Rotorblatt
- 110: Spinner
- 120: Erdreich
- 200: Verfahren
- 201: Verfahrensschritt Bestimmen Nabenhöhe
- 202: Verfahrensschritt Herstellen Fundamentkörper
- 203: Verfahrensschritt Herstellen Turmsockel
- B: Bodenauflast
- F: Beton
- G_{K}: Geländeoberkante
- M: Mittenbereich
- NH: Nabenhöhe
- NH_{SOLL}: Soll-Nabenhöhe
- R_{B}: Rippenbreite
- R_{H}: Rippenhöhe
- S_{H}: Sockelhöhe
- U: Außenkontur

## Patentansprüche

1. Windenergieanlagen-Fundament (1) zur Aufnahme eines Windenergieanlagen-Turms (102), mit
- einem Fundamentkörper (2), der aus mittels einer Bewehrung (4) verstärktem Beton (B) ausgebildet ist, wobei der Fundamentkörper (2)
- eine im Wesentlichen ebene Grundplatte (6) mit einem Sockelbereich (8), und
- mehrere sich oberhalb der Grundplatte (6) vom Sockelbereich (8) nach außen erstreckende Versteifungsrippen (10) aufweist,
wobei auf dem Sockelbereich (8) der Grundplatte (6) ein Turmsockel (14, 14') angeordnet ist, der eine Sockelhöhe (S_{H}) von mehr als 5 m aufweist.

2. Windenergieanlagen-Fundament nach Anspruch 1,
**dadurch gekennzeichnet, dass** die Grundplatte (6) einen im Wesentlichen kreisförmigen Außenkontur (U) aufweist.

3. Windenergieanlagen-Fundament nach Anspruch 1 oder 2,
**dadurch gekennzeichnet, dass** die Grundplatte (6) aus Ortbeton ausgebildet ist.

4. Windenergieanlagen-Fundament nach einem der Ansprüche 1 bis 3,
**dadurch gekennzeichnet, dass** der Turmsockel (14, 14') und/oder die Versteifungsrippen (10) aus Betonfertigteilen oder aus Ortbeton ausgebildet sind.

5. Windenergieanlagen-Fundament nach einem der vorstehenden Ansprüche, **dadurch gekennzeichnet, dass** die Grundplatte (6) und der Sockelbereich (8) einen bewehrungsfreien Mittenbereich (M) haben.

6. Windenergieanlagen-Fundament nach einem der vorstehenden Ansprüche, **dadurch gekennzeichnet, dass** die Grundplatte (6) eine Dicke von weniger als 1 m, insbesondere weniger als 0,70 m, bevorzugt etwa 0,50 m aufweist.

7. Windenergieanlagen-Fundament nach einem der vorstehenden Ansprüche, **dadurch gekennzeichnet, dass** die Versteifungsrippen (10) in Erstreckungsrichtung nach außen eine sich verringernde Rippenhöhe (R_{H}) und/oder eine etwa gleichbleibende Rippenbreite (R_{B}) aufweisen.

8. Windenergieanlagen-Fundament nach einem der vorstehenden Ansprüche, **dadurch gekennzeichnet, dass** die Grundplatte (6) eine im wesentlichen eben Oberseite (26) aufweist, wobei zwischen der Oberseite (26) der Grundplatte (6) und jeder der darauf angeordneten Versteifungsrippen (10) eine Verbindungsfuge (28) vorgesehen ist.

9. Windenergieanlagen-Fundament nach Anspruch 8,
**dadurch gekennzeichnet, dass** zur Ausbildung der verzahnten Verbindungsfuge (28), welche vorzugsweise trapezförmig ausgeführt ist, in den aneinandergrenzenden Bauteilbereichen von der Grundplatte (6) und den Versteifungsrippen (10) ein oder mehrere gewellte(r) Blechstreifen angeordnet ist/sind.

10. Windenergieanlagen-Fundament nach einem der vorstehenden Ansprüche, **dadurch gekennzeichnet, dass** der Fundamentkörper (2) zumindest in seinem Sockelbereich (8) einen Ankerkorb (20) mit einer Vielzahl von etwa senkrecht zur Grundplatte verlaufenden Ankerstangen (22) aufweist, welcher zum Vorspannen des Fundamentkörpers (2) und zum Befestigen des Windenergieanlagen-Turmes (102) auf dem Fundament (1) eingerichtet ist

11. Windenergieanlagen-Fundament nach Anspruch 10,
**dadurch gekennzeichnet, dass** die Ankerstangen (22) sich von dem Fundamentkörper (2) bis über die Oberseite des auf dem Fundamentkörper (2) angeordneten Turmsockels (14, 14') erstrecken und/oder innerhalb des Sockelbereichs (8) eine waagerecht verlaufende Ankerplatte (24) vorgesehen ist, welche vorzugsweise ringförmig ausgebildet ist und mittels derer mehrere oder sämtliche der Vielzahl an Ankerstangen (22) gekoppelt sind.

12. Windenergieanlagen-Fundament nach Anspruch 10 oder 11,
**dadurch gekennzeichnet, dass** die Grundplatte (6) an ihrer Unterseite (26) im Sockelbereich (8) des Fundamentkörpers (2) einen wannenartigen Vorsprung (36) aufweist, in den vorzugsweise sich die Ankerstangen (22) hinein erstrecken und in dem die Ankerplatte (24) angeordnet ist.

13. Verfahren (100) zum Herstellen eines Windenergieanlagen-Fundaments (1), insbesondere eines Windenergieanlagen-Fundaments (1) nach einem der vorstehenden Ansprüche, welches einen Fundamentkörper (2), umfassend eine im Wesentlichen ebene Grundplatte (6), welche einen Sockelbereich (8) aufweist, und mehrere sich oberhalb der Grundplatte (6) vom Sockelbereich (8) nach außen erstreckende Versteifungsrippen (10), und einen auf dem Sockelbereich (8) der Grundplatte (6) angeordneten Turmsockel (14, 14') aufweist, umfassend die Schritte:
- Bestimmen oder Bereitstellen einer Soll-Nabenhöhe der zu errichtenden Windenergieanlage (100) an ihrem Errichtungsort, welche einen Turm (102) mit einer vorbestimmten Höhe aufweist, der auf dem Turmsockel (14, 14') installiert wird,
- Herstellen des Fundamentkörpers (2), und
- Herstellen des oberhalb des Sockelbereichs (8) des Fundamentkörpers (2) anzuordnenden Turmsockels (14, 14'),
wobei das Herstellen des Turmsockels (14, 14') ein Abstimmen der Nabenhöhe (NH) der Windenergieanlage (100) auf die Soll-Nabenhöhe (NH_{Soll}) mittels Anpassen der Sockelhöhe (S_{H}) des Turmsockels (14, 14') auf eine Sockelhöhe (S_{H}) von mehr als 5 m und unter Berücksichtigung einer Turmhöhe eines Standard-Turms (102) für eine Windenergieanlage (100) umfasst.

14. Verfahren nach Anspruch 13,
wobei das Herstellen des Fundamentkörpers (2) zumindest einen, mehrere oder sämtliche der nachfolgend aufgeführten Schritte umfasst:
- Herstellen und/oder Bereitstellen einer Bewehrung für zumindest den Fundamentkörper (2) am Errichtungsort, wobei zumindest ein Teil der Bewehrung vorzugsweise als Ankerkorb (24) ausgebildet ist,
- Herstellen und/oder Bereitstellen einer Schalung um die Bewehrung herum,
- Bereitstellen von Betonfertigteilen, welche vorzugsweise die Versteifungsrippen (10) ausbilden,
- Betonieren zumindest der Grundplatte (6) und des Sockelbereichs (8) des Fundamentkörpers (2) mittels Einbringen von Ortbeton in die Schalung, sodass die Bewehrung nahezu vollständig in dem Ortbeton eingebettet wird, wobei vorzugsweise mit Verwendung von Betonfertigteilen als Versteifungsrippen (10) mit dem Betonieren eine Verbindung zwischen den Betonfertigteilen und der Grundplatte (6) und dem Sockelbereich (8) erzeugt wird, und
- Anpassen der Höhe der Versteifungsrippen (10) an ihrem dem Sockelbereich (8) des Fundamentkörpers (2) zugewandten Ende in Abhängigkeit von der zu erstellenden Sockelhöhe (S_{H}) des Turmsockels (14, 14').

15. Verfahren nach Anspruch 13 oder 14,
wobei das Herstellen des Turmsockels (14, 14') zumindest einen, mehrere oder sämtliche der nachfolgend aufgeführten Schritte umfasst:
- Bereitstellen mindestens eines Betonfertigteils zur Ausbildung des Turmsockels (14, 14') und Aufsetzen des Betonfertigteils auf den Sockelbereich (8) des ausgehärteten Fundamentkörpers (2),
- Koppeln des Betonfertigteils mit der aus dem Fundamentkörper (2) vorstehenden Bewehrung,
- Herstellen und/oder Bereitstellen einer Bewehrung für den Turmsockel (14, 14') am Errichtungsort, wobei vorzugsweise zumindest ein Teil der Bewehrung als Ankerkorb (24) ausgebildet ist, und
- Herstellen und/oder Bereitstellen einer Schalung um die Bewehrung herum, und
- Betonieren des Turmsockels (14, 14') des Fundamentkörpers (2) mittels Einbringen von Ortbeton in die Schalung, sodass die Bewehrung nahezu vollständig in dem Ortbeton eingebettet wird.
